# EUROPEAN PATENT SPECIFICATION

(11) **EP 3 177 139 B1**
(45) Date of publication and mention of the grant of the patent: **16.02.2022**
(21) Application number: 15785196.5
(22) Date of filing: 05.08.2015
(51) Int. Cl.: A01M 17/00

(54) **METHOD FOR THE FUMIGATION TREATMENT OF AGRICULTURAL LANDS AND MACHINE FOR CARRYING OUT SUCH METHOD**
VERFAHREN ZUR BEGASUNGSBEHANDLUNG VON LANDWIRTSCHAFTLICHEN NUTZFLÄCHEN UND VORRICHTUNG ZUR DURCHFÜHRUNG DES VERFAHRENS
PROCÉDÉ PERMETTANT LE TRAITEMENT PAR FUMIGATION DES SURFACES AGRICOLES ET MACHINE PERMETTANT LA MISE EN OELIGUVRE D'UN TEL PROCÉDÉ

(30) Priority: 07.08.2014 IT TO20140640
(43) Date of publication of application: 14.06.2017
(73) Proprietor: ROTER ITALIA S.r.l., 46035 Ostiglia (MN) (IT)
(72) Inventor: SANDRO, Forigo, 46035 Ostiglia (MN) (IT)
(74) Representative: Garavelli, Paolo
(86) International application number: PCT/IT2015/000195
(87) International publication number: WO 2016/020948

(56) References cited:
- WO-A1-95/01091
- FR-A1- 2 799 612
- FR-A1- 2 799 612
- NL-A- 8 102 942
- US-A- 5 996 514
- US-A1- 2004 065 240
- US-A1- 2004 065 240
- US-A1- 2009 120 340
- US-A1- 2009 120 340
- US-B1- 8 161 894
- US-B1- 8 161 894

## Description

The present invention concerns a method for the fumigation treatment of agricultural lands and a machine for carrying out such method.

This method and this machine are adapted in particular to carry out the fumigation treatment of the land at a greater depth than the one reached by tools for plowing the land and for earthing big-sized stones and clods.

Agricultural lands are often infested by fungi and pathogens which are at a depth at which usually employed tools for working the land cannot reach. These tools are normally cutters which plow the land down to a depth of about 15 centimetres. Often these cutters are coupled with spraying device which spray the land itself with liquid fumigating substances, namely which evaporate and exert a disinfesting action at their gaseous state.

In the most sophisticated cases, like those disclosed in European Patents EP1654919 and EP1695602, of the same Applicant, these devices are coupled with earthing machines which manage, in a single pass, to perform the fumigation treatment and the preparation of the land for its sowing.

With these machines, the fumigating substances are inserted into the land at a maximum depth of about 15 centimetres, namely at the maximum depth reached by the tools. It follows that these cultures which deeply develop themselves in the land, such as, for example, potatoes, leeks and carrots, would develop themselves in an untreated part of land, therefore still infested by pathogens and fungi, with the related consequences.

Making machines adapted to treat the land also at higher depths, by simply making them with adequate sizes, is not feasible in the majority of cases, since these machines would be excessively cumbersome and heavy, in addition to be much more costly. Moreover, they would require an actuating power usually unavailable in the majority of tractors used by agricultural farms. Then, in case of cultures performed in greenhouses, it would not even be possible to use tractors with an adequate power, since their sizes would not allow manoeuvring in reduced spaces.

In the current state of the art, therefore, fumigation occurs by injecting fumigating substances at the required depth, for example through sprayers applied at the lower ends of a plurality of ploughshares, which are advanced in the land to be treated, and afterwards performing a mechanical treatment for preparing the land to be sown with cutting or earthing machines. This mechanical operation implies the crushing and overturning of the land and afterwards its compacting, performer with a suitable roller, adapted to make a scarcely permeable layer which allows the injected substances to remain in the land for a long time, where they can exert their fumigating action.

The described art has some inconveniences.

A first inconvenience consists in that ploughshares overturn the land and strongly change its surface, leaving a very wide furrow, from which a big part of the developing gases are dispersed in the atmosphere without having performed their function in the land. In fact, the following working through cutting and compacting necessarily occurs after an interval of time, during which the sprayed substances start evaporating and then being dispersed in the atmosphere. This fact has several negative consequences, since it compels to use greater amounts of fumigating substances, with an increase of costs and a greater environmental impact, since there is a higher amount of chemical products which are dispersed in the environment. Moreover, the operator who passes on the land to perform the second working will be exposed to the action of obnoxious substances for his health.

The fact that the complete operation require a more that double time to be performed must then not be overlooked.

US2004065240A1 discloses a machine adapted to apply fumigating substances below existing flowerbeds which have been subjected to mulching, in particular with mulch made of plastic material, without impairing their integrity, said operation being performed also when there are plants, at least partly already grown. Therefore, this is a machine devised for performing a sort of surgical operation, by making a thin cut in the land through a thin and small-sized blade, at the end of which a nozzle is placed for spraying the fumigating liquid, this blade penetrating into the land till it reaches next to the roots.

A machine complying with patent US2004065240A1 is able to treat the land at the required depth, without overturning the clods, however it is adapted to treat small areas at a low speed (1 to 2 m/sec) . For treating big areas at higher speeds (2 to 3 m/sec), without perturbing the land surface, as it is necessary for treating the lands before their sowing, it is not enough to use bigger-sized blades assembled on machines with suitable power. It is not possible as well to use thin blades, since simple cuts would not be performed, while, to have a high productivity, it is necessary to use anchors capable of opening actual recess in which much greater amounts of treating substance has to be sprayed.

In order to have a high productivity, it is then necessary to quickly create recesses with suitable sizes, adapted to allow spraying suitable amounts of treating substances, without an overturning of the above land, in order to avoid early outcomes of gas. Document US2009120340A1 discloses also a prior art machine.

The present invention solves the above prior art inconveniences by proposing a machine and a method, respectively as claimed in claims 1 and 7 for performing the deep fumigation treatment of agricultural lands.

The method is performed according to claim 7.

The machine is provided according to claim 1.

Actually, it is the creation of the lenticular recess, which is formed upon passing the anchor and it immediately closed, which allows the anchor itself to advance without excessively perturbing the land. In other words, the anchor generates the formation of the lenticular recess, supporting the vault, so that the treating liquid can be sprayed below it.

An original valve completes the invention, this valve being adapted to configure four different paths, which allows performing the tank charging and discharging operations, the tank washing and spraying, by only acting on a lever.

Using the invention therefore allows preparing the land in a single pass, with clear advantages in terms of costs and of environmental impact, lower costs due to less employed time and lower amount of used fumigating substances. There is a lower environmental impact again due to the lower amount of used fumigating substances and in that the employed personnel is not compelled any more to pass again on the land in which sprayed liquids has already started evaporating.

The invention will now be described according to a preferred embodiment thereof and with reference to the enclosed figures in which:
- figures 1 and 2 are two perspective views of the machine according to the invention;
- figure 3 is a side view of the machine in its operating configuration;
- figures 4 (a, b) show, according to three orthogonal views and two perspective views, an anchor equipped with a spraying device;
- figures 5, 6, 7, 8 show, in various configurations, the diagram of the hydraulic circuit of the machine, which allows performing the tank charging and discharging operations, together with working operations and washing of the spraying plant;
- figure 9 shows a control valve of the hydraulic circuit.

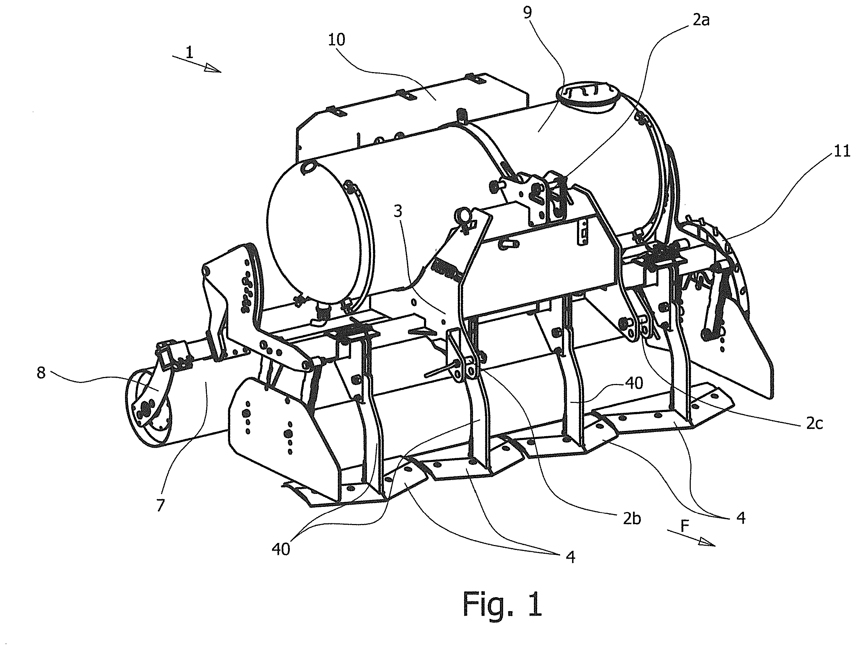

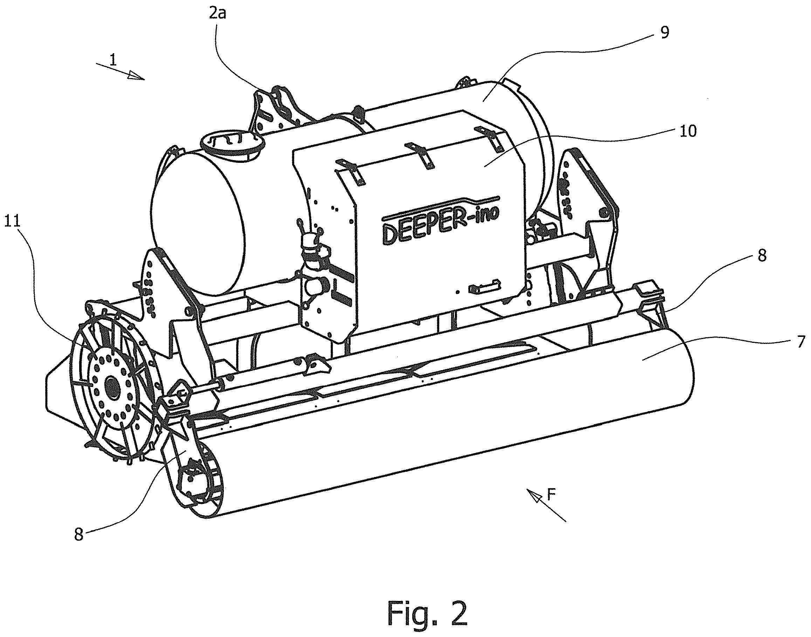

With reference to figures 1, 2 and 3, (1) designates a machine according to the invention. The machine is shown in fig. 1, according to a perspective view, from the part which is connected to the dragging tractor through the classic three-point connection designated with (2a, 2b, 2c) and, in fig. 2, from the opposite part. Arrow F shows the advancement direction when performing the works.

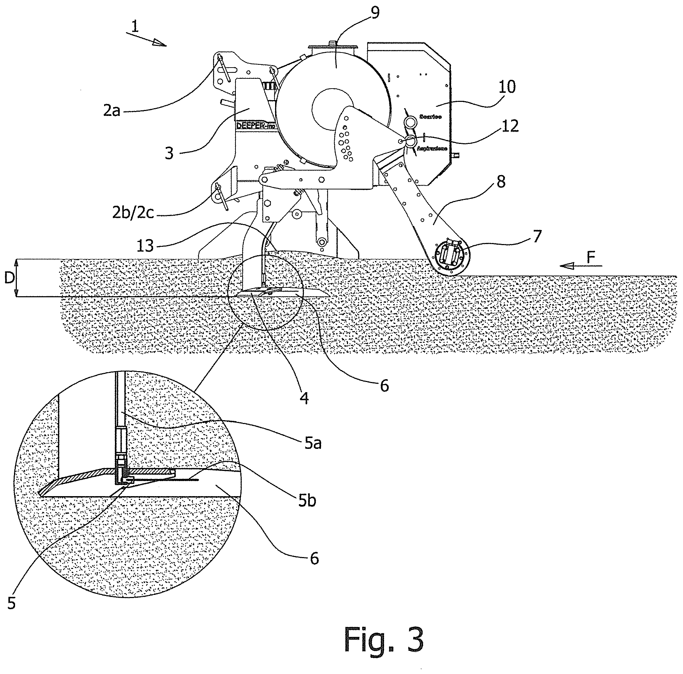

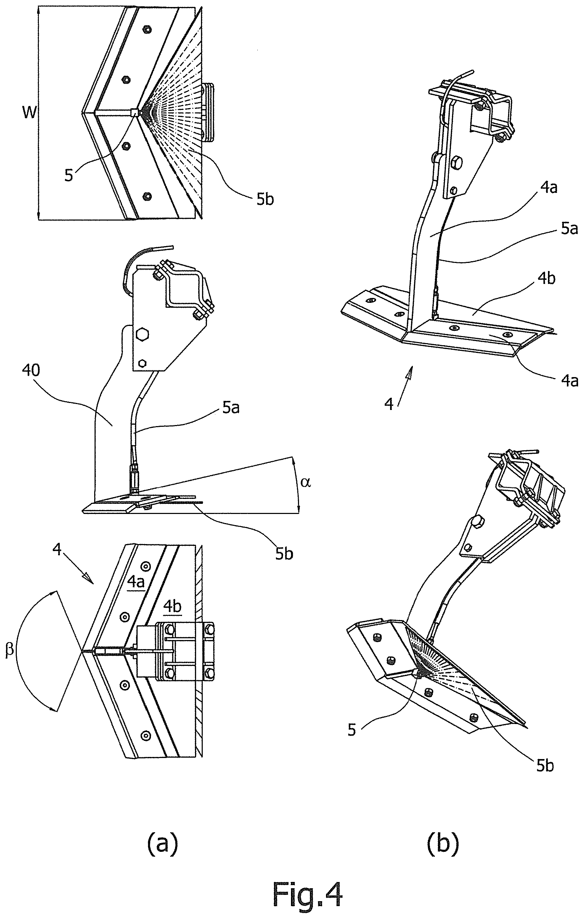

A plurality of anchors (4) are assembled on the chassis (3), through blades (40) which operate as support for said anchors (4). Below each one of these anchors (4) a sprayer (5) is placed (fig. 3), supplied by a piping (5a), which sprays the land. In practice, the anchor (4), by advancing in the land, opens a lenticular recess (6), inside which spraying of the fumigating liquid occurs. To obtain the best spraying result, the jet (5b) of the sprayer (5) ha a thin thickness and widens as a fan in order to reach the side edges of the recess (6). Figures 4 (a, b) shows in more detail the sprayer (5) and the jet (5b) .

To obtain the best operating result, the recess (6) must be wide to allow a quick treatment of the land, but at the same time must be as thin as possible to limit perturbing the above land at a maximum. The recess (6) will then have to have a lenticular shape and will be created by the particular shape of the anchor (4), as will be better specified below.

The machine (1) is completed by a compacting roller (7), preferably of the motored type, assembled at the end of a pair of arms (8), which are oscillating to allow being suited to the working depth of the anchors (4), a tank (9) for containing the fumigating substances, a series of apparatuses, contained in a small cabinet (10), to regulate the flow of liquid to be sprayed, this regulation being performed depending on the advancement speed of the machine, detected by a phonic wheel (11).

The working depth of the anchors (4) is computed by suitable acting on the three-point connection of the tractor, according to the prior art. Depending on this depth, the arms (8), which are pivoting around a point (12) of the chassis (3), allow regulating the height of the compacting roller (7) for smoothing the land after its working.

Figures 4 (a, b) show, with three orthogonal views and two perspective views, an anchor (4) assembled on its support (40) which connects it to the chassis (3) of the machine (1) according to the invention.

The anchor (4) is assembled on the support (40) in order to have a slanted part (4a) which has an incidence angle **α** included between 12° and 20°, and has an sweep angle **β** included between 110° and 140°.

According to a preferred embodiment, it will be **α** = 15° and **β** = 135°. For incidence angles **α** greater than the stated ones, the land tends to be overturned, while for angles **α** lower than the stated ones, the thickness of the recess (6) is too thin, so that it is not possible to have, in front of the sprayer (5), an enough wide free space to allow an efficient spray.

According to the invention, the upper part (4b) of the anchor (4) has a null slanting, having the purpose of supporting the recess (6) vault, in order to guarantee a free space to the below sprayer (5), so as to guarantee that the jet (5b) reaches the edges of the recess (6).

For sweep angles **β** greater than the stated ones, the anchor (4) is not self-cleaned, while for sweep angles **β** lower than the stated ones, the anchor length would become excessive.

Obviously, also the working depth **D** is important, since if this depth **D** is too small, the desired result cannot be obtained.

Researches have shown that for a cross size **W** of the anchor (4) equal to 460÷600 mm, the minimum working depth **D** must be greater than 50 mm.

As regards the supporting blade (40), it will have to be as thin as possible, compatibly with its structural and protecting function for the piping (5a), in order to perform the thinnest possible cut in the land.

Anchors (4) and supports (40) having the above described features only minimally alter the land inside which they advance, so that the land spontaneously tends to be closed due to its own weight.

Synthetically, the anchor (4), by advancing in the land, slightly lift it without generating lateral displacements, or even overturning. Simultaneously, the supporting blade (40) only creates a thin slit which is immediately closed, also due to the compacting roller (7) which immediately compacts the land.

In practice, the land outline, as appears in fig. 3, forms a wave which advances together with the machine, with the highest point (13) on the vertical of the anchor (4). Next to the anchor (4), instead, this recess (6) with a lenticular shape is formed, said recess closing itself immediately after the passage of the anchor (4) due to the wright of the land above. The final compacting, made by the roller (7), suitably regulated in its height, allows obtaining the correct land compactness.

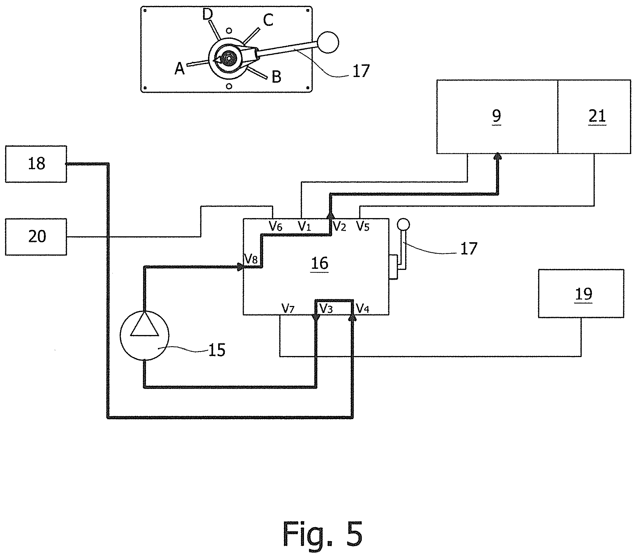

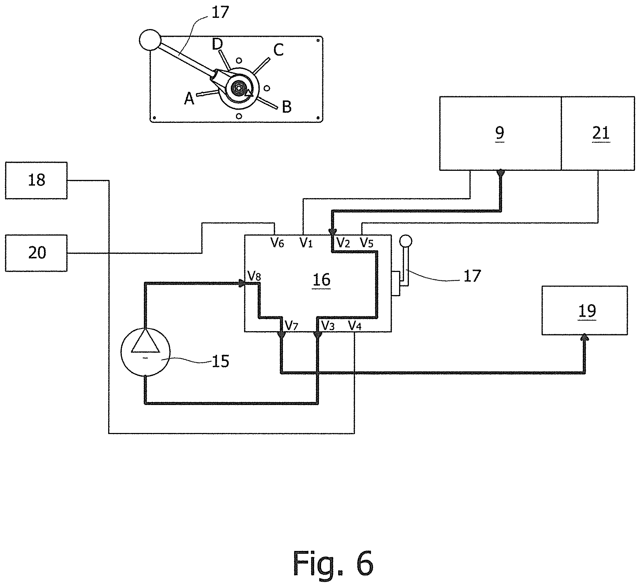

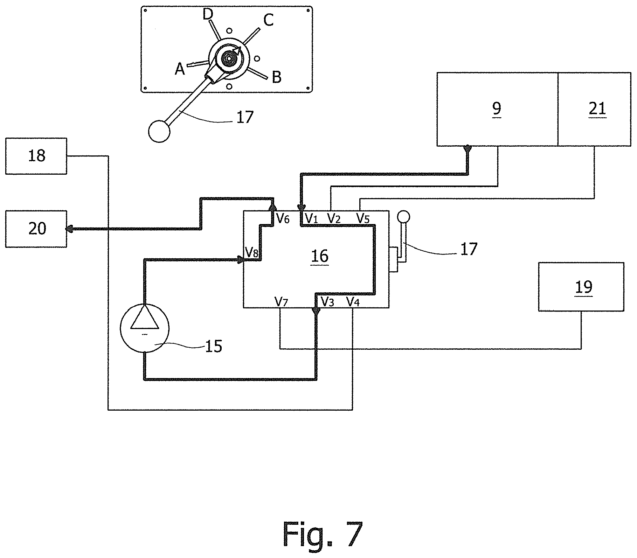

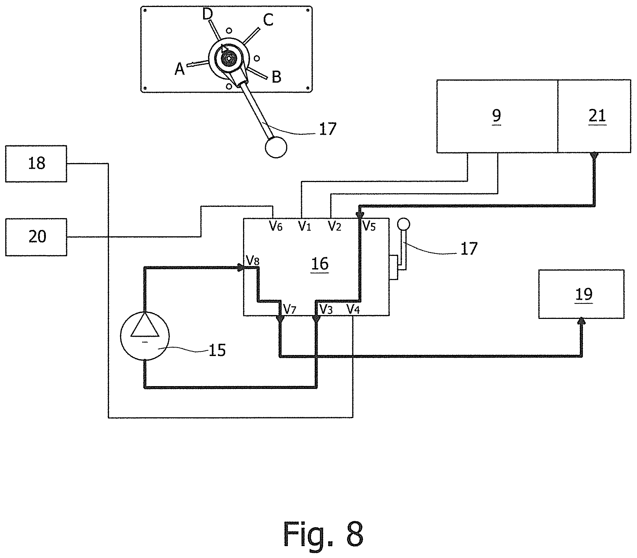

Figures 5, 6, 7, 8 show, in various configurations, the diagram of the hydraulic circuit of the machine which allows performing the following operations:
- sucking the liquid product for treating the land from an external tank (18) and introducing such liquid in the tank (9) of the machine (1);
- spraying the treating product by sucking such product from the tank (9) of the machine (1) and sending it to a spraying plant (19) of the machine (1) ;
- discharging the treating liquid from the tank (9) of the machine (1) and sending it to an external discharging tank (20);
- washing the spraying plant (19) by sucking a washing liquid from a tank of the washing liquid (21) and sending such washing liquid to such spraying plant (19) .

This circuit comprises a pump (15) and a four-way valve (16), controlled by a lever (17). The piping connect pump (15) and valve (16) to various users.

This valve (16) is adapted to configure four paths for said liquids and is actuated by a lever (17), so that a path inside the valve (16) corresponds to a position of this lever (17), according to the following scheme:
- position **A** (sucking): path composed of section **V₄**-**V₃** and section **V₈ - V₂**;
- position **B** (spraying): path composed of section **V₂**-**V₃** and section **V₈ - V₇**;
- position C (discharging): path composed of section **V₁ - V₃** and section **V₈ - V₆**;
- position **D** (washing): path composed of section **V₅**-**V₃** and section **V₈ - V₇**.

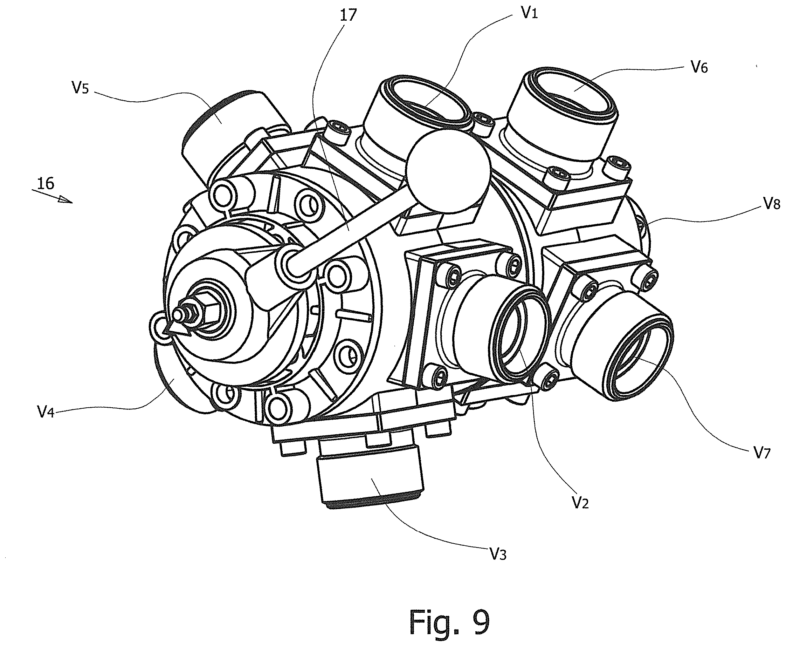

Figure 9 shows a possible embodiment of the four-way valve (16), obtained by suitably connecting two multi-way valves of the known type.

As can be seen from fig. 9, the valve (16) is controlled by a single lever (17), therefore by acting only on said lever it is possible to control all above described operations.

The invention has been described according to a preferred embodiment thereof. The skilled person in the art will be able to find numerous other embodiments, all falling within the scope of the claims which follow.

## Claims

1. Machine (1) for the fumigation treatment of agricultural lands, of the type comprising first means adapted to open a slit (6) in said land and second means (5) adapted to spray such land with a liquid fumigating substance, said second means (5), adapted to spray such land, being placed next to said first means adapted to open said slit (6) in such land, spraying occurring simultaneously with said opening of said slit in the land, said first means being adapted to open a lenticular recess (6) in such land, without overturning the land above said lenticular recess (6), said second means (5) spraying said liquid fumigating substances inside said recess (6) and said lenticular recess (6) closing itself after the spraying of said liquid fumigating substances, in order to prevent a dispersion in the atmosphere of fumes produced by said liquid fumigating substances, in which said first means, adapted to open a lenticular recess (6) in such land, without overturning the land above said lenticular recess (6), comprise at least one anchor (4), rigidly connected to the chassis (3) of the machine (1), said anchor (4) being assembled on a support (40), in order to have a slanted part (4a) which has an incidence angle **α** included between 12° and 20°, and has a sweep angle **β** included between 110° and 140°, **characterized in that** said machine (1) further has an upper part (4b) of the anchor (4) having a null inclination, in order to support a vault of said recess (6), to guarantee a free space to said second means (5) below, so as to spray said fumigating substances till the edges of said recess (6), said second means adapted to spray said land with a liquid fumigating substance, comprising sprayers (5), placed below said anchors (4).

2. Machine (1) according to claim 1, **characterized in that** said incidence angle **α** is 15°.

3. Machine (1) according to claim 1, **characterized in that** said sweep angle **β** is 135°.

4. Machine (1) according to claim 1, **characterized in that** said sprayers (5) are adapted to obtain jets (5b) with thin thickness which widen as a fan, in order to reach the side edges of said recess (6).

5. Machine (1) according to claim 1, **characterised in that** it has third means adapted to compact said land, said third means comprising a roller (7), assembled on a pair of arms (8), pivoting around a point (12) of the chassis (3) of said machine (1), in order to be suited to the working depth D of said anchors (4).

6. Machine (1) according to any one of claims 1 to 5, **characterized in that** it has means adapted to configure an hydraulic circuit for performing the following operations:
• sucking the liquid product for treating the land from an external tank (18) and introducing said liquid into the tank (9) of the machine (1) ;
• spraying the liquid treating product by sucking said product from the tank (9) of the machine (1) and sending the treating product to a spraying plant (19) of the machine (1);
• discharging the liquid treating liquid from the tank (9) of the machine (1) and sending the treating product to an external discharging tank (20);
• washing the spraying plant (19) by sucking a washing liquid from a tank of the washing liquid (21) and sending said washing liquid to said spraying plant (19);
in which said means adapted to configure said hydraulic circuit for performing the charging, spraying, discharging and washing operations comprise a valve (16) adapted to configure four paths for said liquids, said valve (16) being actuated by a lever (17), so that a path inside said valve (16) corresponds to a position of said lever (17), according to the following scheme:
• position **A:** path composed of section **V₄ - V₃** and section **V₈ - V₂;**
• position **B:** path composed of section **V₂** - **V₃** and section **V₈** - **V₇;**
• position **C:** path composed of section **V₁** - **V₃** and section **V₈** - **V₆;**
• position **D:** path composed of section **V₅** - **V₃** and section **V₈** - **V₇**.

7. Method for the fumigation treatment of agricultural lands, of the type which provides for spraying liquid fumigating substances next to means adapted to open a slit in such land, and which uses a machine (1) according to any one of the previous claims 1 to 5, **characterized in that** it provides for opening a lenticular recess (6) in such land and spraying said liquid fumigating substances in said recess (6), forming said lenticular recess (6) occurring without overturning the above land, so that said recess (6) closes itself after spraying said liquid fumigating substances, preventing a dispersion in the atmosphere of fumes produced by said liquid fumigating substances.

## Patentansprüche

1. Maschine (1) zur Begasungsbehandlung von landwirtschaftlichem Boden, von der Art umfassend erste Mittel zum Öffnen eines Schlitzes (6) in dem Boden und zweite Mittel (5) zum Besprühen des Bodens mit einer flüssigen Begasungsmittel, wobei die zweiten Mittel (5), geeignet zum Besprühen des Bodens, in Übereinstimmung mit den ersten Mitteln, die zum Öffnen des Schlitzes (6) in dem Boden geeignet sind, angeordnet werden, wobei das Besprühen gleichzeitig mit dem Öffnen des Schlitzes im Boden erfolgt, wobei die ersten Mittel geeignet sind, um Öffnen eines linsenförmigen Hohlraums (6) in dem Boden, ohne ein Umkippen des Bodens über dem linsenförmigen Hohlraum (6) zu verursachen, das zweite Mittel (5) durch Versprühen der flüssigen Begasungsmittel in den Hohlraum (6) und den linsenförmigen Hohlraum (6) Schließen nach dem Versprühen der flüssigen Begasungsmittel, um die Verteilung der von den flüssigen Begasungsmitteln erzeugten Dämpfe in die Atmosphäre zu verhindern, wobei das erste Mittel, um zum Öffnen eines linsenförmigen Hohlraums (6) in einem solchen Boden, ohne ein Umkippen des Bodens über dem linsenförmigen Hohlraum (6) zu verursachen, enthalten sie mindestens einen Anker (4), der fest mit dem Rahmen (3) der Maschine verbunden ist (1), genannt Anker (4), der auf einem Träger (40) so montiert ist, dass er einen geneigten Teil (4a) aufweist, der einen Einfallswinkel **α** zwischen 12° und 20° und einen Pfeilwinkel **β** zwischen 110° und 140° aufweist, **dadurch gekennzeichnet, dass** die Maschine (1) auch einen oberen Teil (4b) des Ankers (4) ohne Neigung aufweist, um ein Gewölbe des Hohlraums (6) zu tragen, um einen freien Raum für die zweiten Mittel zu gewährleisten (5) unten, um die Begasungsmittel bis zu den Rändern des Hohlraums (6) zu versprühen, wobei die zweiten Mittel zum Besprühen des Bodens mit einer flüssigen Begasungsmittel geeignet sind, die Sprüher (5) umfassen, die unter den Ankern (4) angeordnet sind.

2. Maschine (1) nach Anspruch 1, **dadurch gekennzeichnet, dass** der Einfallswinkel α 15° beträgt

3. Maschine (1) nach Anspruch 1, **dadurch gekennzeichnet, dass** der Pfeilwinkel β 135° beträgt.

4. Maschine (1) nach Anspruch 1, **dadurch gekennzeichnet, dass** die Zerstäuber (5) in der Lage sind, Strahlen (5b) von geringer Dicke zu erzeugen, die sich wie ein Fächer ausbreiten, um die Seitenränder des Hohlraums (6).

5. Maschine (1) nach Anspruch 1, **dadurch gekennzeichnet, dass** sie dritte Mittel zum Verdichten des Bodens bereitstellt, wobei die dritten Mittel eine Walze (7) umfassen, die an einem Paar von Armen (8) angebracht ist und an einem Punkt (12 .) schwenkbar ist ) des Rahmens (3) der Maschine (1), um sich der Arbeitstiefe D dieser Anker (4) anzupassen.

6. Maschine (1) nach einem der Ansprüche 1 bis 5, **dadurch gekennzeichnet, dass** sie Mittel zum Konfigurieren von Hydraulikkreisen zum Ausführen der folgenden Vorgänge bereitstellt:
• Absaugen des flüssigen Produkts zur Bodenbehandlung aus einem externen Tank (18) und Einleiten der Flüssigkeit in den Tank (9) der Maschine (1);
• Versprühen des Behandlungsprodukts durch Absaugen des Produkts aus dem Tank (9) der Maschine (1) und Senden an ein Sprühsystem (19) der Maschine (1);
• Ablassen der Behandlungsflüssigkeit aus dem Tank (9) der Maschine (1) und Weiterleiten an einen externen Ablasstank (20);
• Waschen des Sprühsystems (19) durch Ansaugen einer Waschflüssigkeit aus einem Waschflüssigkeitstank (21) und Senden der Waschflüssigkeit an die Sprühanlage (19);
wobei die Mittel zum Konfigurieren der Hydraulikkreise zum Ausführen der Lade-, Sprüh-, Entlade- und Waschvorgänge ein Ventil (16) umfassen, das geeignet ist, vier Wege für die Flüssigkeiten zu konfigurieren, wobei das Ventil (16) durch einen Hebel (17) betätigt wird. derart, dass ein Weg innerhalb des Ventils (16) einer bestimmten Position des Hebels (17) gemäß dem folgenden Schema entspricht:
• Position A: Strecke bestehend aus dem Abschnitt V4 - V3 und dem Abschnitt V8 - V2;
• Position B: Strecke bestehend aus der Strecke V2 - V3 und der Strecke V8 - V7;
• Position C: Strecke bestehend aus dem Abschnitt V1 - V3 und dem Abschnitt V8 - V6;
• Position D: Strecke bestehend aus dem Abschnitt V5 - V3 und dem Abschnitt V8 - V7.

7. Verfahren zur Begasungsbehandlung von landwirtschaftlichem Boden, von der Art, die das Versprühen von flüssigen Begasungsmitteln in Übereinstimmung mit Mitteln vorsieht, die zum Öffnen eines Schlitzes in dem Boden geeignet sind, und das eine Maschine (1) nach einem der vorhergehenden Ansprüche 1 bis 5, **dadurch gekennzeichnet, dass** die Öffnung einer linsenförmigen Höhle (6) in dem Boden und das Versprühen dieser begasenden flüssigen Substanzen in die Höhle (6) vorgesehen ist, die Bildung der linsenförmigen Höhle (6 ) ohne Umstürzen des oberirdischen Bodens, derart, dass sich der Hohlraum (6) nach dem Versprühen der flüssigen Begasungsmittel schließt, wodurch die Verteilung der von den flüssigen Begasungsmitteln erzeugten Dämpfe in die Atmosphäre verhindert wird.

## Revendications

1. Machine (1) pour le traitement par fumigation des terres agricoles, du type comprenant des premiers moyens pour ouvrir une fente (6) dans ledit sol et des seconds moyens (5) pour asperger ledit sol d'une substance liquide fumigante, lesdits seconds moyens (5), apte à pulvériser ledit sol, étant placé en correspondance avec lesdits premiers moyens aptes à ouvrir ladite fente (6) dans ledit sol, la pulvérisation se produisant simultanément à ladite ouverture de ladite fente dans le sol, lesdits premiers moyens étant aptes à ouvrir une cavité lenticulaire (6) dans ledit sol, sans provoquer le renversement du sol au-dessus de ladite cavité lenticulaire (6), lesdits seconds moyens (5) en pulvérisant lesdites substances liquides fumigantes à l'intérieur de ladite cavité (6) et de ladite cavité lenticulaire (6) fermeture après la pulvérisation desdits fumigants liquides, de manière à empêcher la dispersion dans l'atmosphère des fumées produites par lesdits fumigants liquides, dans laquelle lesdits premiers moyens, pour destinés à ouvrir une cavité lenticulaire (6) dans un tel sol, sans provoquer de renversement du sol au-dessus de ladite cavité lenticulaire (6), ils comportent au moins un ancrage (4), solidaire du châssis (3) de la machine (1), appelée ancre (4) étant montée sur un support (40), de manière à présenter une partie inclinée (4a) qui a un angle d'incidence α compris entre 12° et 20°, et ayant un angle de flèche compris entre 110° et 140°, **caractérisé en ce que** ladite machine (1) présente également une partie supérieure (4b) de l'ancre (4) ayant une inclinaison nulle, de manière à supporter une voûte de ladite cavité (6), pour assurer un espace libre pour lesdits seconds moyens (5) ci-dessous, de manière à pulvériser lesdits fumigants jusqu'aux bords de ladite cavité (6), lesdits seconds moyens aptes à pulvériser ledit sol avec une substance fumigante liquide comprenant des pulvérisateurs (5), placés sous lesdits ancrages (4).

2. Machine (1) selon la revendication 1, **caractérisée en ce que** ledit angle d'incidence α est de 15°

3. Machine (1) selon la revendication 1, **caractérisée en ce que** ledit angle de flèche est de 135°.

4. Machine (1) selon la revendication 1, **caractérisée par le fait que** lesdits pulvérisateurs (5) sont aptes à obtenir des jets (5b) de faible épaisseur qui s'étalent en éventail, de manière à atteindre les bords latéraux de ladite cavité (6).

5. Machine (1) selon la revendication 1, **caractérisée en ce qu'**elle prévoit des troisièmes moyens aptes à compacter ledit sol, lesdits troisièmes moyens comprenant un rouleau (7), monté sur une paire de bras (8), pivotant en un point (12) du châssis (3) de ladite machine (1), de manière à s'adapter à la profondeur de travail D de ces ancrages (4).

6. Machine (1) selon l'une quelconque des revendications 1 à 5, **caractérisée par** le fait de prévoir des moyens de configuration de circuits hydrauliques pour effectuer les opérations suivantes :
• aspiration du produit liquide pour le traitement du sol à partir d'une cuve externe (18) et introduction dudit liquide dans la cuve (9) de la machine (1) ;
• pulvérisation du produit de traitement en aspirant ledit produit de la cuve (9) de la machine (1) et en l'envoyant vers un système de pulvérisation (19) de la machine (1) ;
• évacuation du liquide de traitement de la cuve (9) de la machine (1) et envoi vers une cuve de vidange externe (20) ;
• lavage du système de pulvérisation (19) en aspirant un liquide de lavage d'un réservoir de liquide de lavage (21) et en envoyant ledit liquide de lavage vers ladite installation de pulvérisation (19) ;
dans lequel lesdits moyens adaptés pour configurer lesdits circuits hydrauliques pour effectuer les opérations de chargement, de pulvérisation, de déchargement et de lavage comprennent une vanne (16) adaptée pour configurer quatre chemins pour lesdits liquides, ladite vanne (16) étant actionnée par un levier (17), de telle sorte qu'un chemin à l'intérieur dudit clapet (16) corresponde à une position déterminée dudit levier (17), selon le schéma suivant :
• position A : itinéraire constitué du tronçon V4 - V3 et du tronçon V8 - V2 ;
• position B : itinéraire constitué du tronçon V2 - V3 et du tronçon V8 - V7 ;
• position C : itinéraire constitué du tronçon V1 - V3 et du tronçon V8 - V6 ;
• position D : itinéraire composé du tronçon V5 - V3 et du tronçon V8 - V7.

7. Procédé de traitement par fumigation de terres agricoles, du type qui prévoit la pulvérisation de substances liquides fumigantes en correspondance avec des moyens aptes à ouvrir une fente dans ledit sol, et qui utilise une machine (1) selon l'une quelconque des revendications précédentes de 1 à 5, **caractérisé par** le fait de prévoir l'ouverture d'une cavité lenticulaire (6) dans ledit sol et la pulvérisation de ces substances liquides fumigantes dans ladite cavité (6), la formation de ladite cavité lenticulaire (6) s'effectuant sans renverser le sol aérien, de telle sorte que ladite cavité (6) se referme après la pulvérisation desdites substances liquides fumigantes, gênant la dispersion dans l'atmosphère des fumées produites par lesdites substances liquides fumigantes.
